# EUROPÄISCHE PATENTANMELDUNG

(11) **EP 3 106 284 A1**
(43) Veröffentlichungstag der Anmeldung: **21.12.2016**
(21) Anmeldenummer: 15172648.6
(22) Anmeldetag: 18.06.2015
(51) Int. Cl.: B29C 47/08, B29C 47/04, B29C 67/00

(54) **VERFAHREN UND VORRICHTUNG ZUM AUFTRAGEN ZUMINDEST EINES WERKSTOFFS, EXTRUDER, 3D-DRUCKKOPF, 3D-DRUCKER, WERKZEUGMASCHINE UND STEUEREINRICHTUNG**

(71) Anmelder: Siemens Aktiengesellschaft, 80333 München (DE)
(72) Erfinder: Jähnicke, Jens, 09112 Chemnitz (DE)

(57) **Zusammenfassung**

Die Erfindung betrifft zusammenfassend ein Verfahren und eine Vorrichtung zum Auftragen zumindest eines Werkstoffes (3, 5) auf einen Untergrund oder ein Werkstück (WS), einen Extruder, einen 3D-Druckkopf, einen 3D-Drucker sowie eine Werkzeugmaschine. Weiter betrifft die Erfindung eine Steuereinrichtung. Die Vorrichtung weist einen Grundkörper (1) mit einem Auslass (7) für die Werkstoffe (3, 5) auf. Die Werkstoffe (3, 5) werden durch zumindest zwei Zugangskanäle (2A, 2B) dem Auslass (7) zugeführt und dort vermischt und/oder vermengt. Durch eine Drehbewegung des Grundkörpers (1) in Bezug zum Untergrund oder dem Werkstück (WS) vermengen sich die Werkstoffe (3, 5) analog einer Doppelhelix, bzw. eines Zopfes. Vorteilhaft ist ein Vermengen/Vermischen der Werkstoffe durch die Erfindung verbessert. Bei Anwendung auf ein 3D-Druckverfahren dreht sich entweder das Werkstück (WS) um eine Drehachse (d), die durch den Auslass (7) des Grundkörpers (1) verläuft, oder der Grundkörper (1) und damit der Auslass (7) selbst.

## Beschreibung

Die Erfindung betrifft ein Verfahren und eine Vorrichtung zum Auftragen zumindest eines Werkstoffs auf einen Untergrund oder ein Werkstück, einen Extruder, einen 3D-Druckkopf, einen 3D-Drucker sowie eine Werkzeugmaschine. Weiter betrifft die Erfindung eine Steuereinrichtung.

Das Erstellen dreidimensionaler Formen anhand von Formvorschriften, die in einem Computerprogramm oder in einer Datei gespeichert sind, erfolgt heute oft mittels 3D-Drucker. Eine Möglichkeit des 3D-Druckes mit Hilfe eines 3D-Druckers ist das Fused-Deposition-Modeling (FDM) Verfahren, wobei ein Werkstoff, insbesondere ein Kunststoff oder ein Harz, geschmolzen wird. Mittels einer Düse (Auslass) wird der geschmolzene Werkstoff entlang eines vorher festgelegten Pfades auf einem Untergrund aufgetragen. Der Untergrund ist entweder das unfertige Werkstück oder eine Oberfläche, auf der das Werkstück entstehen soll. Bis heute ist jedoch der Druck von verschiedenfarbigen Werkstücken oder Werkstücken aus unterschiedlichen Werkstoffen nur mit Einschränkungen möglich.

Einen möglichen Lösungsansatz offenbart CN 103770334 A. Der dort beschriebene 3D-Drucker erlaubt es, verschiedene Materialien bzw. verschiedenfarbige Werkstoffe zu einem 3D-Druck heranzuziehen, wobei die verschiedenen Werkstoffe in einem 3D-Druckkopf kombiniert werden und anschließend auf das Werkstück aufgetragen werden.

In DE 10 2011 075 544 A1 ist ein Druckkopf beschrieben, wobei ein Polymerstrang zur Herstellung eines Objektes in der Düse durch Zusatz von Farbstoffen gefärbt wird.

Nachteilig am bisherigen Stand der Technik ist das Fehlen einer Möglichkeit, Werkstücke mit kontinuierlichen Farbübergängen effizient herzustellen.

Es ist daher Aufgabe der Erfindung, die Herstellung von Werkstücken aus mehreren Materialien und/oder Farben zu verbessern.

Diese Aufgabe wird mit einer Vorrichtung gemäß Anspruch 1 gelöst.

Die Aufgabe wird weiter mit einem Verfahren gemäß Anspruch 7 gelöst.

Die Aufgabe wird weiter mit durch eine Steuereinrichtung gemäß Anspruch 11, einen Extruder gemäß Anspruch 12, einen 3D-Druckkopf gemäß Anspruch 13, einem 3D-Drucker gemäß Anspruch 14 und einer Werkzeugmaschine oder Produktionsmaschine gemäß Anspruch 15 gelöst.

Vorteilhafte Ausführungen werden in den abhängigen Ansprüchen beschrieben.

Mit Hilfe der Vorrichtung wird ein Werkstück hergestellt, wobei das Werkstück nach Fertigstellung aus einem ersten Werkstoff sowie einem zweiten Werkstoff und ggf. aus weiteren Werkstoffen besteht. Die Vorrichtung dient dabei vorteilhaft dazu, zumindest den ersten Werkstoff mit zweiten Werkstoff dergestalt zu vermischen, dass an jedem Raumpunkt des Werkstücks ein definiertes Mischungsverhältnis zwischen dem ersten Werkstoff und dem zweiten Werkstoff vorliegt. Um die Vermischung und/oder Vermengung zu erreichen, werden der erste Werkstoff durch den ersten Zugangskanal und der zweite Werkstoff durch den zweiten Zugangskanal dem Auslass zugefügt, so dass bei einer Drehung des Grundkörpers um die Drehachse eine Verquirlung, Vermengung und/oder Vermischung der Werkstoffe in ihrer flüssigen Form erfolgt. Durch diese Verquirlung bzw. Vermischung oder Vermengung der Werkstoffe können die Werkstoffe in einem vorher festgelegten Mischverhältnis an jedem Raumpunkt des Werkstückes vorliegen. Das Mischverhältnis der Werkstoffs und erfolgt vorzugsweise über eine Steuerung bzw. Regelung des Volumenstroms der jeweiligen Werkstoffe. Eine Steuerung bzw. Regelung des Volumenstroms erfolgt beispielsweise über Vorschubelemente.

Die Zuordnungskanäle dienen dem Transport des (ggf. bereichsweise flüssig vorliegenden) Werkstoffes durch den Grundkörper zum Auslass.

Die Drehung des Grundkörpers und/oder eines Teilkörpers oder des Werkstücks, insbesondere um eine Drehachse die durch den Auslass verläuft, dient zur Vermischung bzw. Vermengung der Werkstoffe untereinander.

Unter einer Innenseite eines Auslasses wird beispielsweise die nach innen zeigende Mantelfläche des Auslasses des Grundkörpers verstanden. Die Innenseite des Auslasses steht mit den Werkstoffen, die durch den Auslass gelangen, in Berührung. Somit führt ein sich drehender Auslass durch Reibung zwischen der Innenseite des Auslasses und den Werkstoffen zu einer Durchmischung und/oder Durchmengung der Werkstoffe beim Auftragen der Werkstoffe auf den Untergrund und/oder auf das Werkstück.

Eine Drehung des Grundkörpers, des Extruders oder des gesamten 3D-Druckkopfes in Bezug zum Werkstück oder in Bezug zum Untergrund ist meist einfacher als die Drehung des Werkstückes bei feststehendem Grundkörper/Teilkörper bzw. Extruders.

Anstelle der Drehung des Grundkörpers um eine Drehachse bei einem stationären Werkstoff kann sich, bei einem feststehenden Grundkörper, auch das Werkstück um eine Drehachse drehen.

Bei einer Kombination einer Drehbewegung des Werkstücks und der Translationsbewegung des Grundkörpers bzw. des Extruders kann die Steuerung der Bewegung besonders einfach gestaltet sein. Der Auslass (Aauslassöffnung) ist die Öffnung des Grundkörpers, durch die die Werkstoffe aus den Zugangskanälen auf den Untergrund oder das Werkstück aufgetragen werden. Der Auslass ist, von der Außenseite des Grundkörpers aus betrachtet, eine Öffnung. Die Öffnung bzw. der Auslass bildet das Ende der Zugangskanäle

Ebenfalls ist eine kombinierte Drehbewegung des Werkstücks in Bezug zum Untergrund möglich, wobei sich sowohl das Werkstück bzw. der Untergrund sowie der Grundkörper drehen. Eine Drehung erfolgt auch in diesem Fall um eine Drehachse, die durch den Auslass des Grundkörpers verläuft. Die Drehachse verläuft nicht notwendigerweise durch eine Trägheitsachse/Symmetrieachse des Werkstücks.

Die Drehgeschwindigkeit des Grundkörpers bzw. des Werkstücks legt hierbei den Grad der Vermengung bzw. Vermischung der Werkstoffe untereinander fest.

Vorteilhaft treffen die Zugangskanäle erst unmittelbar vor der Auslassöffnung zusammen, so dass eine Vermischung im Auslass selbst nur einen geringen Anteil des ersten Werkstoffs und des zumindest einen zweiten Werkstoffs betrifft. Bei einer langsamen Drehung des Grundkörpers und/oder des Werkstücks bzw. des Untergrunds erfolgt somit eine Vermengung der Werkstoffe dergestalt, dass ein zopfförmiges Gebilde, bestehend aus dem ersten Werkstoff und dem zweiten Werkstoff, aus dem Auslass hervortritt. Mit anderen Worten erfolgt die Vermengung/Vermischung der Werkstoffe im Wesentlichen außerhalb des Grundkörpers bzw. des Extruders. Für Metalle oder Kunststoffe als Werkstoffen kann der Auslass auch eine zylinderförmige Öffnung mit einem 0,5 mm bis 3 mm höhe sein, wobei die Zugangskanäle an der oberen Deckfläche in den Auslass einmünden und die untere Deckfläche des Auslass die Öffnung des Grundkörpers, also der Auslass, ist.

Als Werkstoff dienen vorteilhaft Kunststoff, insbesondere Thermoplaste, Harze und/oder Metall- bzw. metallische Legierungen.

Mittels der Vorrichtung ist es möglich, Werkstoffe erst am fertigen Werkstück dergestalt zu vermischen, dass eine Entmengung durch unterschiedliche physikalische Eigenschaften der Werkstoffe, welche in einem makroskopischen Mischverhältnis auftreten würde, verhindert wird. Die Werkstoffe durchlaufen in der hier beschriebenen Vorrichtung zumindest Bereichsweise die Zugangskanäle in einer flüssigen/geschmolzenen Form. Nach dem Austritt aus dem Auslass des Grundkörpers erstarren bzw. erkalten die Werkstoffe zu einer festen Mischung der Werkstoffe. Dieses Erstarren kann entweder durch ein Aushärten erfolgen, oft hervorgerufen durch ein Abkühlen der Werkstoffe, oder durch eine chemische Reaktion. Bei Kunststoffen findet ein Erkalten statt, was zu einer Zunahme der Festigkeit führt. Beispielhaft für eine chemische Reaktion für die Aushärtung wäre ein Epoxidharz mit dem entsprechenden Härter.

Die Vorrichtung eignet sich besonders gut um verschiedenfarbige Werkstücke aus einem Werkstoff einer ersten Farbe und einem zweiten Werkstoff einer zweiten Farbe herzustellen. Dabei können die Werkstoffe der unterschiedlichen Farben, insbesondere von Grundfarben, in jedem Mischverhältnis gemischt werden und so ein Werkstück mit jedem erdenklichen Muster oder Farbgestaltung bereitgestellt werden.

Mit Hilfe der Steuereinrichtung wird die Ausführung des Verfahrens gesteuert und/oder überwacht. Die Steuereinrichtung dient vorteilhaft zur Steuerung der Translationsbewegung des Extruders oder des Grundkörpers und/oder des Werkstoffs bzw. des Untergrundes. Die Steuereinrichtung dient vorteilhaft auch zur Steuerung des zumindest einen Heizelements. Zur Einstellung der Zusammensetzung der Werkstoffe und/oder der Farbe des Werkstückes dient die Steuereinrichtung auch zur Steuerung der Vorschubelemente. Die Steuereinrichtung kann Teil der Gesamtsteuerung einer Werkzeugmaschine sein. Die Steuereinrichtung kann auch Teil einer Software sein, welche die Steuerung einer Werkzeugmaschine, eines 3D-Druckers oder einer Produktionsmaschine ergänzt.

Bei einer vorteilhaften Ausgestaltung der Vorrichtung ist der Grundkörper, insbesondere in seiner Gesamtheit, fest mit dem Auslass, insbesondere dessen Innenseite, verbunden. Unter dem festen Verbund wird hier insbesondere ein drehfester Verbund verstanden. In dieser Ausführung dreht sich der gesamte Grundkörper um die Drehachse. Dem rotierenden Grundkörper können weitere Elemente, wie zumindest ein Heizelement, ein Vorschubelement für einen ersten Werkstoff sowie zumindest ein weiteres Vorschubelement für einen weiteren Werkstoff zugeordnet sein. Durch die Drehung des Grundkörpers und somit der Innenseite des Auslasses erfolgt eine Vermischung bzw. Vermengung der Werkstoffe durch die Drehgeschwindigkeit des Grundkörpers.

Bei der Drehung des Ausgangs entsteht eine Art Zopf aus den Werkstoffen. Die Drehgeschwindigkeit und/oder die Zufuhrgeschwindigkeit zumindest eines Werkstoffs definieren dabei den Grad der Vermischung des ersten Werkstoffs mit dem zweiten Werkstoff sowie optional mit den weiteren Werkstoffen.

Bei einer weiteren vorteilhaften Ausgestaltung weist der Grundkörper einen Teilkörper auf, wobei der Teilkörper gegenüber dem Grundkörper drehbar ist, wobei die Zugangskanäle durch den Teilkörper verlaufen, wobei zur Versorgung des ersten Zugangskanals ein Eispeisesystem für den ersten Werkstoff vorgesehen ist, wobei zur Versorgung des zweiten Zugangskanals ein weiteres Einspeisesystem für den zweiten Werkstoff vorgesehen ist.

Vorteilhaft weisen sowohl der Grundkörper als auch der Teilkörper Zugangskanäle auf. Der Übergang der Zugangskanäle des Grundkörpers und des Teilkörpers erfolgt mit dem Einspeisesystem. Falls der Grundkörper und/oder der Teilkörper drei oder mehr Zugangskanäle aufweisen, weist vorteilhaft jeder Zugangskanal des Teilkörpers ein eigenes Einspeisesystem auf. Vorteilhaft ist dem ersten Zugangskanal ein erstes Einspeisesystem und dem zweiten Zugangskanal ein zweites Einspeisesystem zugeordnet.

Die Zugangskanäle des Teilkörpers dienen dem Transport des Werkstoffes vom jeweiligen Einspeisesystem zum Auslass des Grundkörpers. Der Teilkörper ist Teil des Grundkörpers oder ist dem Grundkörper zugeordnet.

Das Einspeisesystem dient vorteilhaft zur Überführung des Werkstoffes aus dem Zugangskanal des Grundkörpers in den Zugangskanal des Teilkörpers.

Bei dieser Ausführungsform dreht sich nur der Teilkörper gegenüber dem (drehfest angeordneten) Grundkörper sowie gegenüber dem Werkstück bzw. dem Untergrund. Der Teilkörper, der dem Grundkörper zugeordnet ist, kann durch einen Motor oder einen Riemenantrieb in Drehbewegung versetzt werden. Die Einspeisevorrichtung bzw. die zumindest eine weitere Einspeisevorrichtung versorgt dabei den ersten Zugangskanal des Teilkörpers mit dem ersten Werkstoff und den zweiten Zugangskanal des Teilkörpers mit dem zweiten Werkstoff. Besonders vorteilhaft an dieser Ausgestaltung ist es, dass sich nur der Teilkörper dreht, so dass das Werkstück bzw. der Untergrund sowie der Grundkörper selbst nicht rotieren. Dann sind aufwendige und komplizierte Verfahren zur Steuerung der Bewegung des Grundkörpers bzw. des Werkstückes/des Untergrundes sowie komplexe konstruktive Maßnahmen nicht notwendig. Anstelle des Grundkörpers weist bei dieser Ausführungsform der Teilkörper den Auslass aus.

Bei einer weiteren vorteilhaften Ausgestaltung ist zur Drehung des Grundkörpers bzw. des Teilkörpers ein Motor vorgesehen.

Der Motor ist vorteilhaft am Grundkörper befestigt, wenn dem Grundkörper ein Teilkörper zugeordnet ist und der Teilkörper sich gegenüber dem Grundkörper dreht. Falls die Drehung des Werkstücks bzw. des Untergrundes vorgesehen ist, so erfolgt die Drehung des Werkstücks bzw. des Untergrundes vorteilhaft mit einem Antriebssystem, welches der beanspruchten Vorrichtung nicht beigehört, sondern beispielsweise die Position des Werkstücks bzw. des Untergrundes in einer Werkzeugmaschine definiert. Vereinfacht kann aber auch der Untergrund oder das Werkzeug mit einem Motor um die Drehachse gedreht werden, wobei die Drehachse durch den Auslass des Grundkörpers bzw. des Teilkörpers geht.

Bei einer weiteren vorteilhaften Ausgestaltung weist der Grundkörper und/oder der Teilkörper zumindest ein Heizelement auf. Das Heizelement dient bei der Vorrichtung vorteilhaft zur Erwärmung der Werkstoffe. Durch die Erwärmung des Werkstoffes schmilzt dieses und kann mit Hilfe der Vorrichtung oder des Extruders auf den Untergrund bzw. das Werkstück aufgetragen werden. Besonders vorteilhaft ist ein Heizelement im unteren Bereich des Grundkörpers angeordnet, so dass eine Mischung bzw. Vermengung der Werkstoffe im Bereich des Auslasses nicht von einer vorzeitigen Erstarrung der Werkstoffe verhindert bzw. verschlechtert wird.

Bei einer vorteilhaften Ausgestaltung des Verfahrens führt der sich drehende Auslass zur Vermischung bzw. Vermengung der Werkstoffe, insbesondere des ersten Werkstoffes mit dem zweiten Werkstoff. Ein Vermengen bzw. Vermischen des ersten und des zweiten Werkstoffs erfolgt durch Reibung der Werkstoffe, insbesondere in ihrer flüssigen Form, durch den Rand bzw. die Innenseite des Auslasses. Somit entsteht ein verquirltes Muster, das einem Zopf aus dem ersten und dem zweiten Werkstoff gleicht.

Eine raue Oberfläche der Innenseite des Auslasses kann eine Vermengung bzw. Vermischung der Werkstoffe fördern. Durch diese vorteilhafte Ausgestaltung ist eine verbesserte Durchmischung bzw. Vermengung des ersten mit dem zumindest einen zweiten Werkstoff möglich.

Die Form des Auslasses bzw. der Öffnung des Auslasses kann dabei eckig, insbesondere rechteckig oder dreieckig, oder zumindest bereichsweise rund gestaltet sein.

Bei einer vorteilhaften Ausgestaltung des Verfahrens führt der sich drehende Auslass zur Vermischung und/oder Vermengung des ersten Werkstoffs und des zumindest einen zweiten Werkstoffs.

Zur Drehung des Auslasses ist es vorteilhaft, den Grundkörper, den Extruder oder zumindest den Teilkörper drehbar auszuführen. Die Drehung erfolgt dann vorteilhaft mit Hilfe des Motors. Die Geschwindigkeit der Drehung ist durch die Steuereinrichtung steuerbar. Die Geschwindigkeit der Drehung in Abhängigkeit der Translationsbewegung des Grundkörpers, des Teilkörpers und/oder des Extruders bestimmt den Grad der Vermengung durch die Enge des entstehenden "Zopfes" aus den Werkstoffen. Vorteilhaft lässt sich durch die Drehung des Auslasses in Bezug zum Untergrund bzw. Werkstück den Grad der Vermengung regeln.

In einer weiteren Ausführung des Verfahrens wird der erste Werkstoff mit einem Vorschubelement durch den ersten Zugangskanal geführt und der zumindest eine zweite Werkstoff durch zumindest ein zweites Vorschubelement durch einen zumindest einen zweiten Zugangskanal geführt.

Durch die Vorschubelemente, die vorteilhaft durch die Steuereinrichtung gesteuert werden, kann der Anteil des ersten Werkstoffes in Bezug zu dem zumindest einen zweiten Werkstoff gesteuert werden. So kann das Material bzw. die Farbe des Werkstücks an jedem Punkt genau eingestellt werden.

Bei einer weiteren vorteilhaften Ausgestaltung des Verfahrens wird mit einem ersten Zugangskanal ein erster Werkstoff in einer ersten Grundfarbe zum Auslass geführt, wobei mit einem zweiten Zugangskanal ein zweiter Werkstoff einer zweiten Grundfarbe zum Auslass geführt wird und wobei mit einem dritten Zugangskanal ein dritter Werkstoff mit einer dritten Grundfarbe zum Auslass geführt wird.

Durch die drei Grundfarben, beispielsweise gelb, blau und rot oder gelb, blau und grün, kann ein Werkstoff beliebiger Farbe bzw. Farbdichte herstellbar. Dadurch sind vorteilhaft Werkstücke beliebiger Farbe und/oder Muster herstellbar. Weiter kann ein Werkstück mit individueller Zusammensetzung von Werkstoffen herstellbar sein.

Einsatzgebiet der Erfindung sind eine Werkzeugmaschine, die neben einer Zerspanungsmöglichkeit des Werkstücks auch über eine additive Fertigungseinheit verfügt, sowie 3D-Drucker, 3D-Druckkopf sowie eine Produktionsmaschine, wobei die Produktionsmaschine zur Erhöhung der Qualität des in ihr erzeugten Produktionsgutes additive Fertigungsschritte einsetzen kann.

Im Folgenden wird die Erfindung anhand von Figuren näher beschrieben und erläutert. Es zeigen
- FIG 1: ein Schema eines Grundkörpers,
- FIG 2: einen Grundkörper mit einem Teilkörper,
- FIG 3: eine weitere Ansicht des Grundkörpers bzw. des Teilkörpers sowie
- FIG 4: ein Schema des Verfahrens zur Herstellung eines Werkstücks.

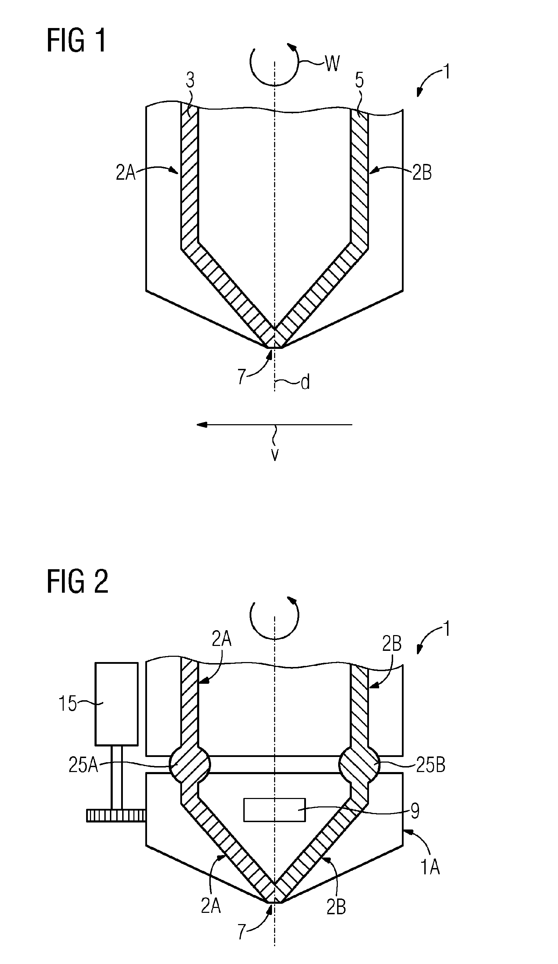

FIG 1 zeigt das Schema eines Grundkörpers 1. Der Grundkörper 1 ist vorteilhaft ein Teil eines 3D-Druckkopfes, wobei der Grundkörper 1 aus einem Metallstück besteht, wobei der Grundkörper 1 einen ersten Zugangskanal 2B und einen zweiten Zugangskanal 2B aufweist, wobei die Zugangskanäle 2A, 2B von oben mit einem ersten Werkstoff 3 bzw. mit einem zweiten Werkstoff 5 gefüllt werden. Die Werkstoffe 3, 5 treten aus einem Auslass 7 des Grundkörpers 1 aus. Der Grundkörper 1 ist drehbar um eine Drehachse d gelagert. Die Drehachse d verläuft durch den Auslass 7, wobei der Auslass 7 an der Unterseite des Grundkörpers 1 angeordnet ist. Sowohl der erste Zugangskanal 2A als auch der zweite Zugangskanal 2B finden ihr Ende unmittelbar beim Auslass 7 des Grundkörpers. Der Auslass 7 des Grundkörpers 1 ist eine nach unten gerichtete Öffnung des Grundkörpers 1, wobei die Zugangskanäle 2A, 2B in dem Auslass 7 münden. Der Grundkörper 1 dreht sich bei dem hier beschriebenen Verfahren um die Drehachse d mit einer Drehgeschwindigkeit W. Während der Herstellung des Werkstückes WS führt der Grundkörper 1 zusätzlich eine Translationsbewegung in Bewegungsrichtung V aus. Die Translationsbewegung erfolgt in Bezug zum Werkstück WS und/oder zur Grundfläche. Die Translationsbewegung ist durch einen Pfeil unterhalb des Grundkörpers 1 gekennzeichnet.

FIG 2 zeigt einen Grundkörper 1 mit einem Teilkörper 1A. Hierbei ist der Teilkörper 1A drehbar mit dem Grundkörper 1 verbunden, wobei der Teilkörper 1A um eine Drehachse d drehbar gelagert ist. Der Teilkörper 1A wird mit Hilfe eines Motors 15 in eine Drehbewegung versetzt, wobei die Drehung des Teilkörpers 1A in Bezug zum Grundkörper 1 und/oder in Bezug zum Werkstück respektive zum Untergrund erfolgt. Der Grundkörper 1 weist einen ersten Zugangskanal 2A und einen zweiten Zugangskanal 2B auf, wobei der erste Zugangskanal 2A in ein erstes Einspeisesystem 25A mündet und der zweite Zugangskanal 2B in ein zweites Einspeisesystem 25B mündet. Das erste Einspeisesystem 25A und das zweite Einspeisesystem 25B dienen als Überbrückungsmöglichkeit für die Werkstoffe 3, 5 zwischen dem Grundkörper 1 und dem Teilkörper 1A, so dass ein erster Werkstoff 3 mit Hilfe des ersten Zugangskanals 2A zum ersten Einspeisesystem 25A in den ersten Zugangskanal 2A des Teilkörpers 1A überführt werden kann. Weiter erfolgt eine Zuführung des zweiten Werkstoffes 5 über einen zweiten Zugangskanal 2B des Grundkörpers 1, anschließend über das zweite Einspeisesystem 25B in den zweiten Zugangskanal 2B des Teilkörpers 1A, wobei der erste und der zweite Zugangskanal 2A, 2B des Teilkörpers 1A in den Auslass 7 des Teilkörpers 1A münden. Es können auch weitere Heizelemente 9 dem Grundkörper 1 zugeordnet sein.

Entgegen der Darstellung in FIG 2 ist zwischen dem Grundkörper 1 und dem Teilkörper 1A kein makroskopischer Spalt vorhanden. Vielmehr liegen die Oberfläche des Teilkörpers 1A an der gegenüberliegenden Oberfläche des Grundkörpers 1 an. Möglich ist auch eine Zwischenschicht (nicht gezeigt) zwischen der unteren Oberfläche des Grundkörpers 1 und der oberen Oberfläche des Teilkörpers 1A, die im Bereich der Einspeisesysteme 25A, 25B nicht durchgängig verläuft. Mit dieser Zwischenschicht können die Einspeisesysteme 25A, 25B abgedichtet werden. Zusätzlich kann die Reibung vermindert werden. Die Zwischenschicht kann auch durch eine Beschichtung des Teilkörpers 1A und/oder des Grundkörpers 1 realisiert sein.

Der Teilkörper 1A weist hier zusätzlich ein Heizelement 9 auf, so dass ein erster Werkstoff 3 und ein zweiter Werkstoff 5 nicht in einem Zugangskanal 2A, 2B des Teilkörpers 1A erstarren oder sich verfestigen. Die in FIG 2 gezeigte Ausführung besitzt den Vorteil, dass sich lediglich der Teilkörper 1A im Verhältnis zum Grundkörper 1 bzw. zum Werkstück WS dreht, so dass eine komplizierte Drehung des Werkstücks WS bzw. des Untergrunds und/oder eine Drehung des Grundkörpers 1 entfällt.

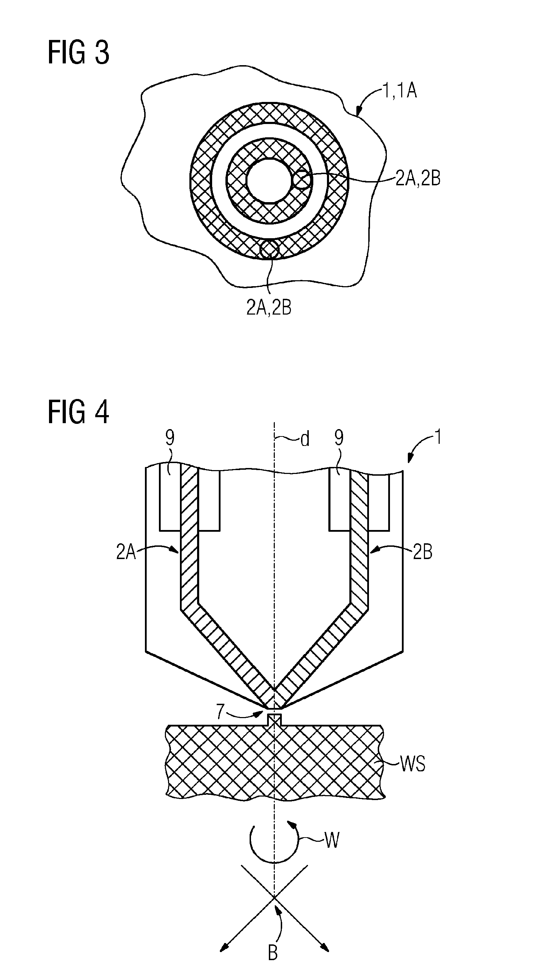

FIG 3 zeigt eine weitere Ansicht des Grundkörpers 1 bzw. des Teilkörpers 1A. Dargestellt ist der Zwischenbereich zwischen dem Grundkörper 1 und dem Teilkörper 1A, wobei sowohl der Grundkörper 1 als auch der Teilkörper 2 an der Seite, an der beide zusammengefügt sind, die schraffiert gekennzeichneten Aussparungen aufweisen. Die im Druckkopf aneinander anliegenden Oberflächen weisen jeweils zwei Torus-schnittförmige Aussparungen auf, welche zur Überführung des ersten Werkstoffes 3 bzw. des zweiten Werkstoffes 5 vorgesehen sind. Die beiden Torus-schnittförmigen Aussparungen des Grundkörpers bzw. des Teilkörpers 1A weisen Öffnungen auf, wobei die Öffnungen die Zugänge zu den Zugangskanälen 2A, 2B darstellen. Beim Zusammenfügen des Grundkörpers 1 mit dem Teilkörper 1A ergibt sich somit eine Torus-förmige Aussparung. Die Torus-förmige Aussparung ist an einer Seite vom Teilkörper 1a begrenzt. Die Torus-förmige Aussparung ist an der anderen Seite vom Grundkörper 1 begrenzt. Die Torus-schnittförmigen Aussparungen weisen auf der Seite des Teilkörpers 1 einen Auslass zum jeweiligen Zugangskanal 2A, 2B auf sowie einen Einlass auf der Seite des Grundkörpers auf. Der Einlass ist jeweils mit dem Zugangskanal 2A, 2B des Grundkörpers 1 verbunden. Die Verbindung der Zugangskanäle 2A, 2B auf der Seite des Grundkörpers 1 durch das jeweilige Einspeisesystem 25A, 25B mit den jeweiligen Zugangskanälen 2A, 2B des Teilkörpers dient der Überführung der Werkstoffe 3, 5 vom Zugangskanal 2A, 2B des Grundkörpers 1 zu den entsprechenden Zugangskanälen 2A, 2B des Teilkörpers.

Die Drehachse d steht dabei senkrecht, etwa in der Mitte der gezeigten Oberflächen. Bei einer Drehung des Teilkörpers 1 in Bezug zum Grundkörper 1A bleibt die Form der Torus-förmigen Aussparungen erhalten.

Die Torus-förmige Aussparung mit den beiden Öffnungen (Einlassöffnung und einer Auslassöffnung), die in den Zugangskanälen 2A, 2B münden, bilden das Einspeisesystem 25A, 25B. Ein Grundkörper 1 mit zugeordnetem Teilkörper 1A weist pro zu verarbeitenden Werkstoff 3, 5 ein solches Einspeisesystem 25A, 25B auf.

Die Torus-förmigen Aussparungen werden durch den jeweilig eingehenden Zugangskanal 2A, 2B (des Grundkörpers 1) mit einem Werkstoff 3, 5 gefüllt. Der Werkstoff 3, 5 verlässt die Torus-förmige Aussparung durch den Zugangskanal 2A, 2B des Teilkörpers 1A.

FIG 4 zeigt das Schema eines Verfahrens zur Herstellung eines Werkstücks WS. Gezeigt ist der Grundkörper 1 mit dem ersten Zugangskanal 2A und dem zweiten Zugangskanal 2B, wobei dem ersten und dem zweiten Zugangskanal 2A, 2B jeweils ein Heizelement 9 zugeordnet ist. Der erste Werkstoff 3 wird durch den ersten Zugangskanal 2A durch den Auslass 7 auf das Werkstück WS aufgetragen und der zweite Werkstoff 5 wird durch den zweiten Zugangskanal 2B durch den Auslass 7 auf das Werkstück WS aufgetragen. Es kann auch ein Auftragen auf einen Untergrund erfolgen. Anstelle des Grundkörpers 1 bzw. des Teilkörpers 1A dreht sich hier das Werkstück WS bzw. der Untergrund um eine Drehachse d mit einer Drehgeschwindigkeit w. Das Werkstück WS und/oder der Untergrund bewegen sich zusätzlich so, dass sich das Werkstück WS und/oder der Untergrund fortwährend um die Drehachse d dreht, wobei die Drehachse d durch den Auslass 7 verläuft. Dies ist durch die gekreuzten Pfeile B unter dem Werkstück WS symbolisiert. In der hier gezeigten Ausgestaltung bleibt der Grundkörper 1 bzw. der Teilkörper 1A in seiner Ausrichtung konstant. Der Grundkörper 1A ändert lediglich in einer translatorischen Bewegung seine Position in Bezug auf das Werkstück WS bzw. in Bezug auf den Untergrund.

Die (Translations-)Bewegung des Werkstückes WS, des Grundkörpers 1, die Drehgeschwindigkeit v des Grundkörpers 1, des Teilkörpers 1A, sowie die Bewegung des Werkstücks WS / des Untergrundes in der Ausführungsform, die in FIG 4 gezeigt ist, wird anhand der Vorgaben für das Werkstück durch die Steuereinrichtung gesteuert bzw. geregelt. Die Steuereinrichtung kann darüber hinaus die Heizelemente 9, den Motor 15, sowie ggf. weitere Elemente steuern. Die Translationsbewegung des Werkstückes ist durch die gekreuzten Pfeile B unterhalb des Werkstücks WS symbolisiert.

Obgleich die hier gezeigten Ausführungsbeispiele jeweils mit zwei Zugangskanälen 2A, 2B und zwei, insbesondere verschiedene, Werkstoffe 3, 5 gezeigt werden, ist die Erfindung auch mit jeweils drei, vier oder mehr Zugangskanälen für drei, vier oder mehr Werkstoffe anwendbar.

Besonders vorteilhaft kann diese Erfindung zur Bereitstellung eines Werkstoffes aus einer metallischen Legierung genutzt werden. Die Metalle, insbesondere einen niedrigen Schmelzpunkt aufweisende Metalle, können durch die hier beschriebene Vorrichtung bzw. das hier beschriebene Verfahren zu einer Legierung vermengt werden und die Legierung kann als Material für ein Werkstück dienen. Somit lassen sich auch Metalle mit unterschiedlichen Dichten, z. B. Aluminium und Blei, als Werkstoff zur Herstellung eines Werkstücks einsetzen.

Zusammenfassend betrifft die Erfindung ein Verfahren und eine Vorrichtung zum Auftragen zumindest eines Werkstoffes 3, 5 auf einen Untergrund oder ein Werkstück WS, einen Extruder, einen 3D-Druckkopf, einen 3D-Drucker sowie eine Werkzeugmaschine. Weiter betrifft die Erfindung eine Steuereinrichtung. Die Vorrichtung weist einen Grundkörper 1 mit einem Auslass 7 für die Werkstoffe 3, 5 auf. Die Werkstoffe 3, 5 werden durch zumindest zwei Zugangskanäle 2A, 2B dem Auslass 7 zugeführt und dort vermischt und/oder vermengt. Durch eine Drehbewegung des Grundkörpers 1 in Bezug zum Untergrund oder dem Werkstück WS vermengen sich die Werkstoffe 3, 5 analog einer Doppelhelix, bzw. eines Zopfes. Vorteilhaft ist ein Vermengen/Vermischen der Werkstoffe durch die Erfindung verbessert. Bei Anwendung auf ein 3D-Druckverfahren dreht sich entweder das Werkstück WS um eine Drehachse d, die durch den Auslass 7 des Grundkörpers 1 verläuft, oder der Grundkörper 1 und damit der Auslass 7 selbst.

## Patentansprüche

1. Vorrichtung zum Auftragen zumindest eines Werkstoffes (3, 5) auf einen Untergrund oder auf ein Werkstück (WS), insbesondere durch ein Fused-Deposition-Modelling-Verfahren, aufweisend einen Grundkörper (1), wobei der Grundkörper (1) zumindest einen ersten Zugangskanal (2A) und einen zweiten Zugangskanal (2B) aufweist, wobei der erste Zugangskanal (2A) für einen ersten Werkstoff (3) vorgesehen ist, wobei der zweite Zugangskanal (2B) für einen zweiten Werkstoff (5) vorgesehen ist, wobei die Zugangskanäle (2A, 2B) in einem Auslass (7) des Grundkörpers (1) münden, wobei eine Innenseite des Auslasses (1) und/oder das Werkstück (WS) und/oder der Untergrund um eine Drehachse (d) drehbar ist, wobei die Drehachse (d) durch den Auslass verläuft, wobei beim Austritt des zumindest ersten Werkstoffs (3) und zweiten Werkstoffs (5) durch den Auslass (7) eine Vereinigung des ersten Werkstoffes (3) und des zweiten Werkstoffes (5) vorgesehen ist.

2. Vorrichtung nach Anspruch 1, wobei der Auslass (7) die zusammengeführten Enden der Zugangskanäle (2A, 2B) bildet.

3. Vorrichtung nach Anspruch 1 oder 2, wobei der Grundköper einen Teilkörper (1A) aufweist, wobei der Teilkörper (1A) gegenüber dem Grundkörper (1) drehbar ist, wobei die Zugangskanäle (2A, 2B) durch den Teilkörper (1A) verlaufen, wobei zur Versorgung des ersten Zugangskanals (2A) ein Einspeisesystem (25A) für dem ersten Werkstoff (3) vorgesehen ist und wobei zur Versorgung des zweiten Zugangskanals (2B) ein weiteres Einspeisesystem (25B) für den zweiten Werkstoff (5) vorgesehen ist.

4. Vorrichtung nach Anspruch 1, wobei zur Drehung des Grundkörpers (1) oder des Teilkörpers ein Motor (15) vorgesehen ist.

5. Vorrichtung nach einem der vorangehenden Ansprüche, wobei der Grundkörper (1) und/oder der Teilkörper (1A) zumindest ein Heizelement (9) aufweisen.

6. Verfahren zum Auftragen zumindest eines Werkstoffes (3, 5) auf einen Untergrund oder auf ein Werkstück (WS), insbesondere ein Fused-Deposition-Modelling Verfahren, wobei zumindest ein erster Werkstoff (3) durch einen ersten Zugangskanal (2A) und ein zweiter Werkstoff (5) durch einen zweiten Zugangskanal (2B) einem Auslass (7) zugeführt werden, wobei sich der Grundkörper und/oder das Werkstück und der Untergrund um eine Drehachse (d) dreht, wobei die Drehachse (d) durch den Auslass (7) verläuft.

7. Verfahren nach Anspruch 6, wobei der sich drehende Grundkörper (1) zur Vermischung und/oder Vermengung des ersten Werkstoffs (3) und des zweiten Werkstoff (5) führt.

8. Verfahren nach Anspruch 6 oder 7, wobei der der erste Werkstoff (3) mit einem ersten Vorschubelement durch den ersten Zugangskanal (2A) geführt wird und wobei der zweite Werkstoff (5) durch ein zweites Vorschubelement durch einen zweiten Zugangskanal (2B) geführt wird.

9. Verfahren nach einem der Ansprüche 6 bis 8, wobei mit einem ersten Zugangskanal (2A) ein erster Werkstoff (3) einer ersten Grundfarbe zum Auslass (7) geführt wird, wobei mit einem zweiten Zugangskanal (2B) ein zweiter Werkstoff (5) einer zweiten Grundfarbe zum Auslass (7) geführt wird und wobei mit einem dritten Zugangskanal ein dritter Werkstoff einer dritten Grundfarbe zum Auslass (7) geführt wird.

10. Steuereinrichtung zur Durchführung eines Verfahrens nach einem der Ansprüche 6 bis 9, wobei die Steuereinrichtung zumindest zur Steuerung von zumindest einem Vorschubelement vorgesehen ist.

11. Extruder, aufweisend eine Vorrichtung nach einem der Ansprüche 1 bis 5.

12. 3D-Druckkopf, aufweisend eine Vorrichtung nach einem der Ansprüche 1 bis 5.

13. 3D-Drucker, aufweisend eine Vorrichtung nach einem der Ansprüche 1 bis 5, wobei die Vorrichtung und/oder das Werkstück und/oder der Untergrund drehbar ist.

14. Werkzeugmaschine oder Produktionsmaschine, aufweisend eine Vorrichtung nach einem der Ansprüche 1 bis 5.
